# EUROPEAN PATENT APPLICATION

(11) **EP 4 462 777 A1**
(43) Date of publication of application: **13.11.2024**
(21) Application number: 23315196.8
(22) Date of filing: 11.05.2023
(51) Int. Cl.: H04N 19/117, H04N 19/14, H04N 19/86

(54) **METHOD FOR IMAGE PROCESSING AND APPARATUS FOR IMPLEMENTING THE SAME**

(71) Applicant: ATEME, 78140 Velizy Villacoublay (FR)
(72) Inventor: Danten, Simon, 35000 RENNES (FR)
(74) Representative: Plasseraud IP

(57) **Abstract**

A method of processing an image is proposed, which comprises: perform contour detection on the image to detect one or more contours in the image; for at least one contour of the image, determine a ringing area of pixels, wherein the ringing area comprises a first set of pixels of the image located on a first side of the at least one contour; determine a local background area of pixels that corresponds to the ringing area; determine a ringing local distortion value for at least one pixel of the ringing area; determine a background local distortion value for a pixel of the local background area that corresponds to the at least one pixel of the ringing area; compare the ringing local distortion value with the background local distortion value; and determine a quality coefficient based on the comparison.

## Description

The present disclosure relates to the field of image processing, in particular image processing for deringing.

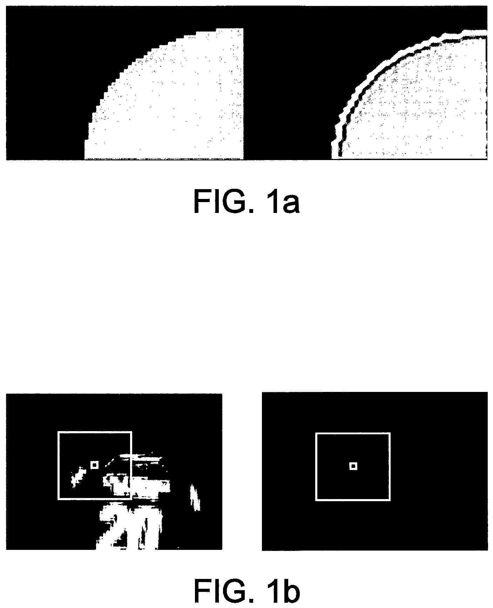

The so-called "ringing" effect, sometimes also referred to as the "Gibbs phenomenon," corresponds to the loss of high frequency information of a signal, which inter alia occurs during coefficient-quantization performed as part of encoding of an image. The ringing artefacts are more severe as quantization is performed with larger quantization coefficients, and when visible typically show on an image as oscillations located nearby strong contours which create so-called hit bells effects, such as shown on Fig. 1a (which illustrates on the right hand-side the hit bells effect on a sharp contour, as opposed to the image on the left hand-side), and so-called "mosquito noise", such as shown on Fig. 1b (which illustrates in the square on the left hand-side the mosquito noise effect on a contour of a football player, and on the right hand-side the activity associated with such mosquito noise).

Video data is often source encoded so as to decrease the amount of resources necessary for its transmission and/or storage in memory. Various video coding or compression standards that have been developed over the recent years, such as H.264/AVC, H.265/HEVC, JK2, JXS or MPEG-2, may be used for that purpose. These video encoding scheme have in common that they use frequency-transform/quantization coding. As a consequence to using a quantization scheme, they can generate ringing in encoded images (or frames), this because they cause a loss of high-frequency information on the encoded images as compared to before encoding.

Encoded video data may also encounter further processing along a distribution chain to end user devices, and it may be desirable for performing such further processing to reduce ringing artefacts that may have been created on an encoded image by previous encoding processing using quantization.

Therefore it is desirable to measure the impact of quantization on generated ringing in encoded images in order to improve processing of such images, such as processing performed downstream of the encoding in a multimedia distribution chain.

There is therefore a need for providing an improved image processing scheme and apparatus implementing the same that address at least some of the drawbacks and shortcomings of the conventional technology in the art.

It is an object of the present subject disclosure to provide an improved image processing scheme and apparatus implementing the same.

Another object of the present subject disclosure is to provide an improved image processing scheme for measuring the impact of quantization on generated ringing in encoded images, and apparatuses implementing the same.

To achieve these objects and other advantages and in accordance with the purpose of the present subject disclosure, as embodied and broadly described herein, in one aspect of the present subject disclosure, a method of processing an image, a digital video frame, or more generally digital video data, is proposed. The proposed method comprises: perform contour detection on the image to detect one or more contours in the image; and, for at least one contour of the image: determine a ringing area of pixels, wherein the ringing area comprises a first set of pixels of the image located on a first side of the at least one contour; determine a local background area of pixels that corresponds to the ringing area, wherein the local background area comprises a second block of pixels of the image located on the first side of the at least one contour beyond the ringing area; determine a ringing local distortion value for at least one pixel of the ringing area; determine a background local distortion value for a pixel of the local background area that corresponds to the at least one pixel of the ringing area; compare the ringing local distortion value with the background local distortion value; and determine a quality coefficient based on the comparison.

The proposed scheme therefore provides the determination of a quality coefficient for a contour of the image. As the determination of such quality coefficient is based in some embodiments on ringing measurement(s) in the neighborhood of the contour, such quality coefficient advantageously represents the amount of ringing present in the contour or in the neighborhood of the contour in the image. Furthermore, as such amount of ringing may in some embodiments be related (for example may be proportional or close to proportional) to the deterioration of the image during quantization of the high frequency information present in the original (pre-encoding) image, the quality coefficient provided by the present subject disclosure may advantageously be used as an estimate of the amount of deterioration of the image.

In one or more embodiments, the proposed method may further comprise: determine a set of pixels of the ringing area comprising pixels in the neighborhood of the at least one pixel of the ringing area; and determine respective local distortion values for pixels of the set of pixels of the ringing area; and the ringing local distortion value may be determined based on a mean of the respective local distortion values for pixels of the set of pixels of the ringing area.

In one or more embodiments, the proposed method may further comprise: determine a set of pixels of the local background area comprising pixels in the neighborhood of the pixel of the local background area that corresponds to the at least one pixel of the ringing area; and determine respective local distortion values for pixels of the set of pixels of the local background area; and the background local distortion value may be determined based on a mean of the respective local distortion values for pixels of the set of pixels of the local background area.

In one or more embodiments, wherein a size in number of pixels of the set of pixels of the ringing area may be substantially similar to a size in number of pixels of the set of pixels of the local background area.

In one or more embodiments, the proposed method may further comprise: determine the at least one pixel in the ringing area among pixels of the ringing area; determine the pixel of the local background area that corresponds to the at least one pixel of the ringing area, and the determined quality coefficient may be associated to the at least one pixel in the ringing area.

In one or more embodiments, the pixel of the local background area that corresponds to the at least one pixel of the ringing area may be determined as a pixel in the local background area which is symmetric of the at least one pixel of the ringing area with respect to a boundary area, and the boundary area may comprise pixels of the image located in-between the ringing area and the local background area.

In one or more embodiments, the ringing area may be determined as a set of pixels located between the at least one contour of the image and a first predetermined distance of the at least one contour of the image, and the first predetermined distance may be expressed as a first number of pixels.

In one or more embodiments, the first number of pixels may be greater than 2.

In one or more embodiments, the local background area may be determined as a set of pixels located between the at least one contour of the image and a second predetermined distance of the at least one contour of the image, the second predetermined distance may be expressed as a second number of pixels, and the second number of pixels may be greater than the first number of pixels.

In one or more embodiments, the local background area may be comprised of pixels of the image which are not comprised in any of the one or more contours.

In one or more embodiments, the local background area may be comprised of pixels of the image which are not comprised in any of ringing areas determined on the image.

In one or more embodiments, determining the ringing area may comprise, for one or more pixels of the at least one contour of the image: determining a set of pixels located at most at a third predetermined distance of a pixel of the at least one contour of the image, and determining the ringing area as comprising pixels of the set of pixels located on the first side of the at least one contour. The third predetermined distance may be expressed as a third number of pixels, and the ringing area may not comprise pixels of the at least one contour.

In one or more embodiments, the proposed method may further comprise: determine a boundary area of pixels, wherein the boundary area comprises pixels of the image located in-between the ringing area and the local background area; and for at least one pixel of the boundary area, determine the at least one pixel of the ringing area as a pixel of the ringing area that corresponds to the at least one pixel of the boundary area. The determined quality coefficient may be associated to the at least one pixel of the boundary area.

In one or more embodiments, performing the comparison may comprise: determine a processing area of pixels around the pixel of the boundary area, wherein the processing area comprises pixels of the local background area and pixels of the ringing area, compare a mean local distortion value computed on pixels of the ringing area comprised in the processing area with a mean local distortion value computed on pixels of the local background area comprised in the processing area.

In one or more embodiments, the proposed method may further comprise: perform image decomposition on the image to generate a cartoon image. The contour detection to detect the one or more contours in the image may be performed on the cartoon image.

In one or more embodiments, the local distortion value of a pixel of the image may be based on a combination of a horizontal gradient at the pixel and a vertical gradient at the pixel determined for the pixel.

In one or more embodiments, the local distortion value *ld*(*x,y*) for a pixel (*x,y*) may be computed as: *ld*(*x,y*) = *Dₕ*(*x,y*) + *Dᵥ*(*x,y*), where *Dₕ*(*x,y*) is a horizontal gradient at the pixel (*x*,*y*) and *Dᵥ*(*x,y*) is a vertical gradient at the pixel (*x,y*).

In one or more embodiments, comparing the ringing local distortion value with the background local distortion value may comprise: computing a ratio of the ringing local distortion value by the background local distortion value, the quality coefficient may be determined based on the ratio.

In one or more embodiments, the proposed method may further comprise: determining a quantization table estimate based on the quality coefficient or based on a mean quality coefficient calculated on a plurality of quality coefficients determined for a pixel block of the image or for the image. The quality coefficient may be comprised in the plurality of quality coefficients.

In one or more embodiments, the quantization table estimate may be determined based on the quality coefficient or the mean quality coefficient using a predefined table of correspondences between quality coefficients and quantization tables.

In one or more embodiments, the proposed method may further comprise: using the quality coefficient for estimating a quantization table that was used for processing the image.

In another aspect of the present subject disclosure, an apparatus is proposed, which comprises a processor, and a memory operatively coupled to the processor, wherein the apparatus is configured to perform a method as proposed in the present subject disclosure.

In yet another aspect of the present subject disclosure, an image processing apparatus is proposed, which is configured to process images, for example of video data, and comprises an apparatus as proposed configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

For example, in embodiments, the present subject disclosure provides a non-transitory computer-readable medium encoded with executable instructions which, when executed, causes an apparatus comprising a processor operatively coupled with a memory, to process an image, a digital video frame, or more generally digital video data, by performing, by the processor, contour detection on the image to detect one or more contours in the image, and for at least one contour of the image, by determining, by the processor, a ringing area of pixels, wherein the ringing area comprises a first set of pixels of the image located on a first side of the at least one contour, determining, by the processor, a local background area of pixels that corresponds to the ringing area, wherein the local background area comprises a second block of pixels of the image located on the first side of the at least one contour beyond the ringing area, determining, by the processor, a ringing local distortion value for at least one pixel of the ringing area, determining, by the processor, a background local distortion value for a pixel of the local background area that corresponds to the at least one pixel of the ringing area, comparing, by the processor, the ringing local distortion value with the background local distortion value, and determining, by the processor, a quality coefficient based on the comparison.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figures 1a and 1b illustrate ringing in the form of a hit-bells effect and a mosquito noise, respectively;
Figure 2 illustrates an exemplary image processing method according to one or more embodiments of the present subject disclosure;
Fig. 3a illustrates a portion of an image that includes a contour, a ringing area of pixels, and a local background area of pixels;
Fig. 3b illustrates the same elements as Fig. 3a, with a smaller scale;
Fig. 4a shows a portion of an exemplary image which comprises two football players;
Fig. 4b shows an exemplary cartoon image determined in accordance with one or more embodiments of the present subject disclosure;
Fig. 4c shows the result of an exemplary of a contour detection applied on the cartoon image determined in accordance with one or more embodiments of the present subject disclosure;
Fig. 4d show an exemplary set of areas comprising a ringing area, a boundary area, and a local background area, determined in accordance with one or more embodiments of the present subject disclosure;
Fig. 4e shows an exemplary map of local distortions determined in accordance with one or more embodiments of the present subject disclosure;
Fig. 4f shows a pixel located on an exemplary boundary area and an exemplary processing area determined in accordance with one or more embodiments of the present subject disclosure;
Figure 5 illustrates an exemplary multimedia processing chain in accordance with one or more embodiments of the present subject disclosure;

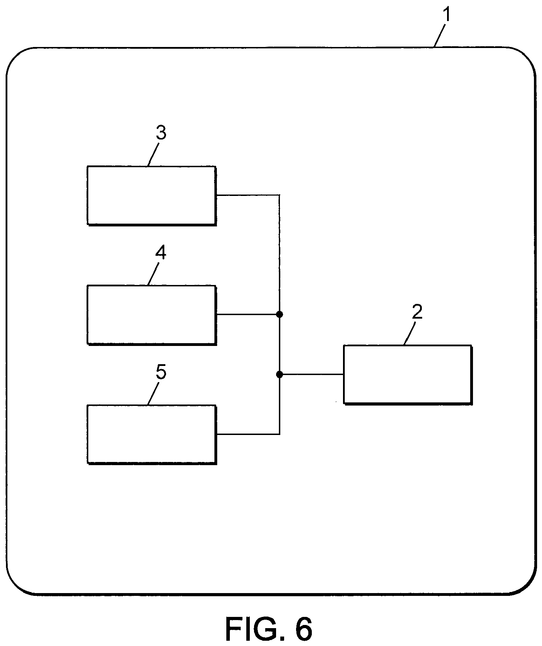

Figure 6 illustrates an exemplary apparatus or unit configured to use one or more image processing features in accordance with one or more embodiments of the present subject disclosure.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

"Server" or "platform" in the present subject disclosure means any (virtualized or nonvirtualized) point of service or computer device or system performing data processing operations, one or more databases, and/or data communication functions. For example, and without limitation, the term "server" or the term "platform" may refer to a physical processor operationally coupled to associated communication, database and data storage functions, or refer to a network, a group, a set or a complex of processors and associated data storage and networking equipment, and to an operating system and one or more database system(s) and application software supporting the services and functions provided by the server. A server or platform may be configured to operate in or as part of a cloud computing environment. A computer device or system may be configured so as to send and receive signals, via wireless and/or wired transmission networks(s), or be configured so as to process and/or store data or signals, and may therefore operate as a server. Equipment configured so as to operate as a server may thus include, by way of non-limiting example, dedicated servers mounted on a rack, cloud-based servers, desktop computers, laptop computers, service gateways (sometimes called "box" or "home gateway"), multimedia decoders (sometimes called "set-top boxes"), integrated equipment combining various functionalities, such as two or more of the abovementioned functionalities. The servers may vary greatly in terms of their configuration or their capabilities, but a server will generally include one or more central processing unit(s) and a memory. A server may also include one or more item(s) of mass memory equipment, one or more electric power supply/supplies, one or more wireless and/or wired network interface(s), one or more input/output interface(s), one or more operating system(s), such as Windows Server, Mac OS X, Unix, Linux, FreeBSD, or an equivalent.

In the present description, the terms "terminal", "user equipment", "reader", "reading device", "reading terminal" and "video reader" are used interchangeably to denote any type of device, implemented by one or more items of software, one or more items of hardware, or a combination or one or more items of software and one or more items of hardware, configured so as to use multimedia content distributed in accordance with a distribution protocol, for example a multi-screen distribution protocol, in particular by loading and by reading the content. The terms "client" and "video-reading client" are also used interchangeably to denote any type of device, software and/or hardware, or any function or set of functions, implemented by software and/or hardware within a device and configured so as to use multimedia content distributed in accordance with a distribution protocol, for example a multi-screen distribution protocol, in particular by loading the content from a server and by reading the content.

The terms "network" and "communication network" as used in the present description refer to one or more data links that may couple or connect possibly virtualized equipment so as to allow electronic data to be transported between computer systems and/or modules and/or other devices or electronic equipment, such as between a server and a client device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols, and interoperate with larger networks. Various types of equipment may be used to make various architectures or various protocols interoperable. For example, a router may be used to provide a communication link or a data link between two LANs that would otherwise be separate and independent.

As used herein, the term "pixel" means a picture element or an elementary component of an image, which may be represented by a numeric value, e.g. a natural integer value. A pixel of a digital image may be coded digitally, and its value may be coded into a bitstream. Further, a pixel of an image may represent image data according to color spaces, such as the Y, Cb and Cr color spaces, wherein Y is a luma component of the pixel (also called a luma pixel or a luma sample), and C_{b} and Cᵣ are the blue-difference and red-difference chroma components of the pixel. Two channel types may also be distinguished for a pixel: a luma channel type, corresponding to the luma component of the pixel, and a chroma channel type, jointly designating the chroma components of the pixel. The chroma channel type pixel may itself be divided into the blue-difference (Cb) chroma component and the red-difference (Cr) chroma component. In the following, the term "plane" may be used to refer to, depending on the implementation, a color space, a channel type, or a component of the pixel to which all or part of the proposed method may be applied. For example, processing a pixel in the luma plane may correspond to processing a luma component of the pixel (typically associated with a so-called "luminance plane", referred to as the "Y" plane), while processing the pixel in a chroma plane may correspond to processing a chroma component of the pixel (two chrominance planes being generally used and referred to as the "U" and "V" planes, or "Cb" and "Cr" planes). In the following, unless stated otherwise, an operation described as applicable to a pixel may be applied to any pixel component, whether chroma or luma, that is, regardless of whether the pixel represents a luma component or a chroma component of a three-color component pixel. In the following, some embodiments of the proposed methods, apparatuses and computer programs are described for the exemplary processing of pixels of an image in the Y, Cb, and/or Cr planes. However, it will be appreciated by those having ordinary skill in the relevant art that other color spaces, such as, for example, the YUV, Y'CbCr, or RGB color spaces, may be used in place of or in addition to the set of YCbCr color spaces, which is given by way of example only according to embodiments of the present subject disclosure.

The methods proposed in the present subject disclosure may be implemented by any video encoder, video decoder, or video codec configured for encoding and/or decoding images (or frames) of input video data containing grain, film grain and/or noise, such as, for example a video encoder and/or decoder compliant with any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/WC, and MPEG-5 EVC specifications or standards, whether in their existing versions and/or their evolutions, as the case may be adapted for implementing one or more embodiments of the proposed methods.

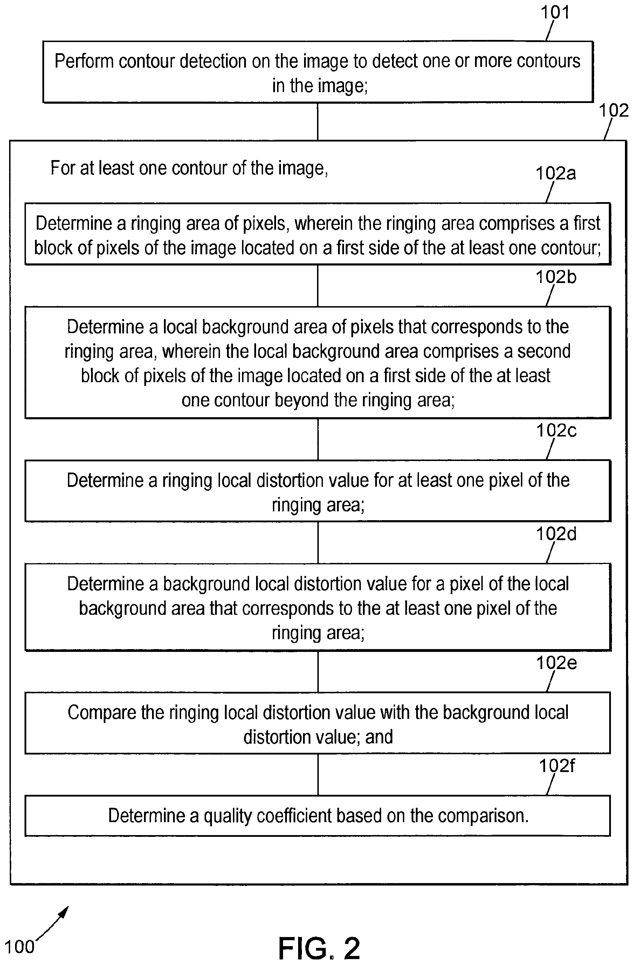

Fig. 2 illustrates a method (100) according to one or more embodiments.

In one or more embodiments, an image to be processed according to the present subject disclosure may first be processed for contour detection on the image, which may result in detecting one or more contours in the image.

In some embodiments, a contour may be detected as an area of the image corresponding to a set of pixels of the image the area separating two areas of the image with different contrast value. The difference of contrast between two areas of the images may therefore lead to the detection of a contour in-between the two area. A contour may therefore correspond to a set of pixels of the image which visually forms a curve corresponding to the transition between two areas having different contrast. A contour separating two areas of the image having widely different contrast may be referred to as a sharp contour.

In some embodiments, contour detection may be performed (101) on the image to be processed in order to detect one or more contours in the image.

Any suitable contour detection scheme, such as for example based on Sobel filtering, may be used to perform contour detection on the image according to the present invention disclosure.

The present subject disclosure advantageously provides, further to the determination of one or more contours in an image (or a video frame), that such contours may be analyzed in order to derive therefrom one or more quality factors for the image. In some embodiments, a quality factor may measure the deterioration or degradation generated by a quantization operation performed as part of a previous encoding of the image.

In one or more embodiments, several operations (102) may be performed for at least one contour of the image, which was for example identified as a result of the contour detection performed on the image.

In one or more embodiments, a first area of pixels, which may be referred to as a "ringing area of pixels", may be determined (102a) as a set of one or more pixels of the image located on a first side of the at least one contour.

In one or more embodiments, a second area of pixels, which may be referred to as a "local background area of pixels", may be determined (102b) as a set of one or more pixels of the image which are also located on the first side of the at least one contour, and beyond the ringing area.

In one or more embodiments, the ringing area of pixels and the local background area of pixels may be determined so that they do not overlap. In such embodiments, a pixel of the image may therefore not concurrently belong to a ringing area and to a local background area. For example, in one or more embodiments, the local background area may be comprised of pixels of the image which are not comprised in any of ringing areas determined on the image.

Further, in one or more embodiments, the local background area may be determined so that it does not overlap with any determined contour, and in particular with the corresponding contour. Similarly, the local background area may be comprised of pixels of the image which are not comprised in any of the one or more contours.

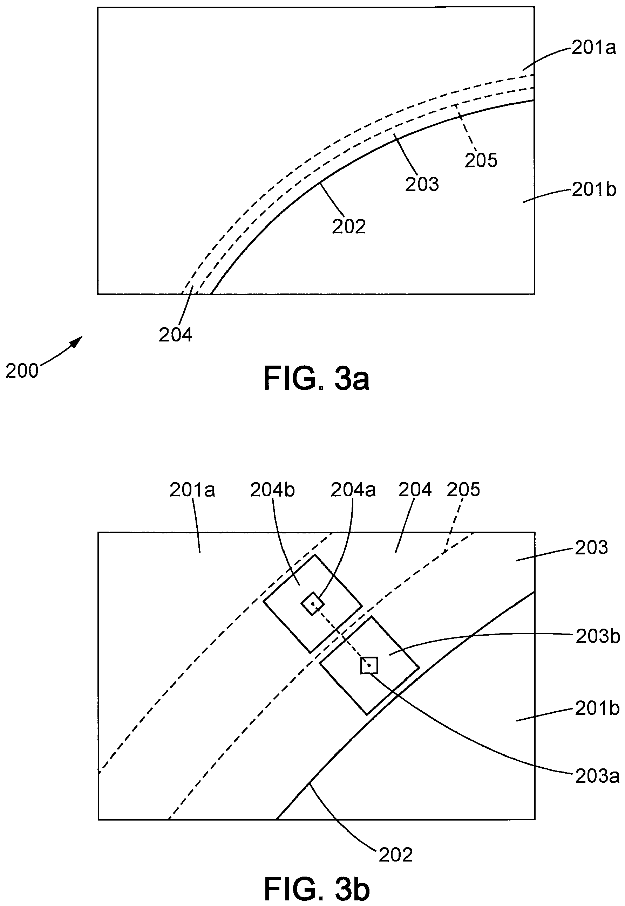

Fig. 3a illustrates a portion (200) of an image that includes a contour (202), a ringing area of pixels (203), and a local background area of pixels (204).

Fig. 3a shows a contour (202), which is a set of pixels that delimits the boundary in-between a first contrast area (201a) having a first contrast and a second contrast area (201b) having a second contrast, which is different from the first contrast.

As illustrated in Fig. 3a, the ringing area (203) may be determined as an area of pixels which is adjacent to the contour (202) on one side of the contour (202) in which ringing may occur, for example as a consequence of quantization operations performed as part of a previous encoding of the image. The local background area (204) may be determined as an area of pixels which is adjacent to the ringing area (203) and located on the same side of the contour (202) as the side of the contour in which the ringing area is located.

Referring again to Fig. 2, in one or more embodiments, a ringing local distortion value may be determined (102c) for at least one pixel of the ringing area.

In one or more embodiments, a pixel of the local background area that corresponds to the pixel of the ringing area may be determined, and a background local distortion value may be determined (102d) for the pixel of the local background area that corresponds to the at least one pixel of the ringing area.

In some embodiments in which respective ringing local distortion values are determined for several pixels of the ringing area, a pixel of the local background area that respectively corresponds to each of the pixels of the ringing area may be determined, and respective background local distortion values may be determined for the pixels of the local background area that respectively correspond to the pixels of the ringing area.

In one or more embodiments, the ringing local distortion value may be compared (102e) with the background local distortion value.

In one or more embodiments, a quality coefficient may be determined (102f) based on the comparison of the ringing local distortion value with the background local distortion value.

In one or more embodiments, several iterations of the proposed scheme that results in the determination of a quality coefficient for a determined contour may be performed, for example as part of the execution of a processing loop, thereby resulting in the determination of several quality coefficients for the image respectively corresponding to several contours present in the image.

In one or more embodiments, a set of pixels of the ringing area may be determined. For example, the determined set of pixels of the ringing area may comprise pixels in the ringing area that are located in the neighborhood of the at least one pixel of the ringing area.

In some embodiments, the at least one pixel of the ringing area may be determined as part of the determination of the set of pixels of the ringing area.

For example, in some embodiments, a block of *n* × *n* pixels of the ringing area may be determined, where *n* is a natural integer whose value may be chosen depending on the embodiment (e.g. *n* = 2, 3, or 4). Any suitable size and shape may be used for a block of pixels in the ringing area depending on the embodiment.

In embodiments in which a set of pixels is determined in the ringing area, respective local distortion values may be determined for pixels of the set of pixels of the ringing area, and the ringing local distortion value may be determined based on a mean of the respective local distortion values determined for pixels of the set of pixels of the ringing area.

Using a set of a plurality of pixels of the ringing area for determining the ringing local distortion value advantageously allows reducing the computation complexity of the proposed scheme, as compared to embodiments in which a ringing local distortion value is determined for each pixel of the ringing area. In addition, using a set of a plurality of pixels of the ringing area for determining the ringing local distortion value allows determining a mean value of ringing local distortion values, which advantageously avoids local minimums and maximums in the ringing local distortion values.

In embodiments in which a set of pixels of the ringing area is determined, a set of pixels of the local background area may also be determined. For example, the set of pixels in the local background area may comprise pixels in the local background area that are located in the neighborhood of the pixel of the local background area that corresponds to the at least one pixel of the ringing area.

In some embodiments, the pixel of the local background area that corresponds to the at least one pixel of the ringing area may be determined as part of the determination of the set of pixels of the local background area.

For example, in some embodiments, a block of m × m pixels of the local background area may be determined, where m is a natural integer whose value may be chosen depending on the embodiment (e.g. m=2, 3, or 4). Any suitable size and shape may be used for a block of pixels in the local background area depending on the embodiment.

In one or more embodiments, the set of pixels of the local background area may be determined to include pixels that respectively correspond to pixels of the set of pixels of the ringing area.

In some embodiments, the set of pixels of the local background area and the set of pixels of the ringing area may form respective blocks of pixels, and the determined block of pixels in the local background area may correspond to the determined block of pixels in the ringing area.

For example, in some embodiments, the determined set of of pixels in the local background area may correspond to the determined set of pixels in the ringing area at least in that a size in number of pixels of the set of pixels of the ringing area is substantially similar to a size in number of pixels of the set of pixels of the local background area. In embodiments in which the set of pixels of the local background area and the set of pixels of the ringing area may form respective blocks of pixels, the block of pixels in the ringing area and the block of pixels in the local background area may be of substantially the same size (e.g. expressed in number of pixels) (e.g. the two blocks may be of the same size).

For example, in some embodiments, the set of pixels in the local background area may correspond to the set of pixels in the ringing area at least in that the set of pixels in the local background area may be located in the local background area substantially adjacent (e.g. adjacent) to the position in the ringing area of the set of pixels of the ringing area.

In embodiments in which a set of pixels is determined in the local background area, respective local distortion values may be determined for pixels of the set of pixels of the local background area, and the background local distortion value may be determined based on a mean of the respective local distortion values determined for pixels of the set of pixels of the local background area.

Using a set of a plurality of pixels of the local background area for determining the local background area local distortion value advantageously allows reducing the computation complexity of the proposed scheme, as compared to embodiments in which a background area local distortion value is determined for each pixel of the local background area. In addition, it may be advantageous to determine the background local distortion value based on a mean of local distortion values respectively determined for a plurality of pixels of the local background area in embodiments in which such plurality of pixels of the local background area correspond to a plurality of pixels of the ringing area, and the ringing local distortion value is also determined based on a mean of local distortion values respectively determined for the plurality of pixels of the ringing area. As discussed above, using a mean local distortion value is beneficial as it advantageously avoids local minimums and maximums in the ringing local distortion values.

In one or more embodiments, the ringing area (203) may be determined as a set of pixels located between the at least one contour (202) of the image and a first predetermined distance of the at least one contour (202) of the image. For example, the first predetermined distance may be expressed as a first number *N*₁ of pixels, which may, depending on the embodiment, be chosen in a predetermined interval of natural integers *n*₁ and *n*₂ (e.g. *n*₁ ≤ *N*₁ ≤ *n*₂)*,* or chosen with respect to a predetermined threshold *Thr1* corresponding to a chosen width, e.g. expressed as a number of pixels, of the ringing area (203) (e.g. *N*₁ ≤ *Thr*1)*.* In some embodiments, the first number of pixels may be chosen greater than a minimum width integer number of pixels (e.g. *N*₁ *≥ Min_Width*1)*,* for example chosen equal to 2 (*Min_Width*1 = 2), so as to advantageously define a minimum width of the ringing area.

In one or more embodiments, the local background area (204) may be determined as a set of pixels located between the at least one contour (202) of the image and a second predetermined distance of the at least one contour of the image. For example, the second predetermined distance may be expressed as a second number *N*₂ of pixels. The second number of pixels *N*₂ may preferably be chosen greater than the first number of pixels *N*₁, so that the local background area (may be located on the same side of the contour (202) as the ringing area (203) and, with respect to the contour (202), beyond the ringing area (203). As illustrated by Figs. 3a and 3b, the ringing area (203) may be located next to the contour (202) on one side of the contour (202), and the local background area (204) may be located next to the ringing area (203) at a greater distance from the contour (202).

For example, in some embodiments, the ringing area (202) may form a layer of width *N*₁ pixels external to the contour (202) (and possibly adjacent to the contour), and the local background area (204) may form a layer of width *N*₂-*N*₁ pixels external to the ringing area (203) (and possibly adjacent to the ringing area (203)).

Depending on the embodiment, the second number of pixels *N*₂ may be chosen in a predetermined interval of natural integers *n*₃ and *n*₄ (e.g. *n*₃ ≤ *N*₂ ≤ *n*₄*,* possibly with *N*₁ ≤ *n*₃), or chosen with respect to a predetermined threshold *Thr2* corresponding to a chosen width, e.g. expressed as a number of pixels, of the local background area (204) (e.g. *N*₂ such that *N*₂ - *N*₁ ≤ *Thr*2)*.* In some embodiments, the first number of pixels may be chosen greater than a minimum width integer number of pixels (e.g. *N*₂ such that *N*₂ - *N*₁ ≥ *Min_Width*2)*,* for example chosen equal to 2 (*Min_Width*2 = 2), so as to advantageously define a minimum width of the local background area.

Depending on the embodiment, the width *N*₁ of the ringing area and the width *N*₂ - *N*₁ of the local background area may be chosen equal, or substantially equal. Likewise, depending on the embodiment, the minimum width of the ringing area and the minimum width of the local background area may be chosen equal, or substantially equal.

In one or more embodiments, determining the ringing area may comprise, for one or more pixels of the at least one contour of the image, the determining of a set of pixels located at most at a third predetermined distance of a pixel of the at least one contour of the image, and determining the ringing area as comprising pixels of the set of pixels located on the first side of the at least one contour. In some embodiments, the third predetermined distance may be expressed as a third number of pixels. Further, in some embodiments, the ringing area does not comprise pixels of the at least one contour

In the following, a description of a first set of operations for performing the proposed scheme according to embodiments of the present subject disclosure is provided.

Various embodiments of the first set of operations are illustrated by Fig. 3b, which shows the same elements as shown on Fig. 3a with a smaller scale.

In one or more embodiments, the proposed method may further comprise a determination of the at least one pixel (203a) in the ringing area (203) among pixels of the ringing area (203), so that once the ringing area (203) is determined, a pixel (203a) of the ringing area (203) may be selected for performing the proposed scheme. Depending on the embodiment, the selection of the at least one pixel (203a) in the ringing area (203) may be a random selection or a selection performed according to any suitable criterion.

For example, a pixel may be selected in the ringing area based on its position in the ringing area, for example based on its distance to the at least one contour (202), e.g. based on a comparison of its distance to the at least one contour (202) with a predetermined threshold, or based on its distance to the at least one contour (202) being in a predetermined interval. The distance to the at least one contour (202) may be calculated based on an orthogonal projection of a point representing the at least one pixel (203a) to the at least one contour (202).

In some embodiments, a subset of pixels forming a block of pixels (203b) of the ringing area may be determined. For example, as shown on Fig. 3b, the subset of pixels may be chosen such that it substantially covers a local width of the ringing area (203), corresponding to the local transversal length in between the contour (202) and the local background area (204). In such embodiments, the at least one pixel (203a) of the ringing area (203) may be selected in the block of pixels (203b) of the ringing area (203). Depending on the embodiment, the selection of the at least one pixel (203a) in the block of pixels (203b) of the ringing area (203) may be a random selection or a selection performed according to any suitable criterion.

Once the at least one pixel of the ringing area is determined, a pixel of the local background area that corresponds to the at least one pixel of the ringing area may be determined. For example, a pixel may be selected in the local background area based on the at least one pixel of the ringing area, e.g. based on a position of the at least one pixel in the ringing area.

For example, in some embodiments, the pixel of the local background area may be chosen such that it is at a distance to a boundary line of pixels (which may also be referred to herein as a "boundary area") (205) between the ringing area and the local background area which is substantially the same as a distance of the at least one ringing pixel to the boundary area (205). The distance of a pixel to the boundary area may be calculated based on an orthogonal projection of a point representing the pixel to the boundary area (205).

In some embodiments, the pixel of the local background area that corresponds to the at least one pixel of the ringing area may be determined as a pixel in the local background area which is symmetric of the at least one pixel of the ringing area with respect to a boundary area, such as the area (205), which comprises pixels of the image located in-between the ringing area and the local background area.

In some embodiments, a subset of pixels forming a block of pixels (204b) of the local background area (204) may be determined based on the at least one pixel (203a) of the ringing area. As a consequence, the block of pixels (204b) of the local background area may correspond to the at least one pixel (203a) of the ringing area. In such embodiments, the pixel (204a) of the local background area may be selected in the block of pixels (204b) of the local background area. Depending on the embodiment, the selection of the pixel (204a) in the block of pixels (204b) of the local background area (204) may be a random selection or a selection performed according to any suitable criterion.

In embodiments in which a subset of pixels forming a block of pixels (203b) of the ringing area is determined, a subset of pixels forming a block of pixels (204b) of the local background area (204) may be determined based on the subset of pixels forming a block of pixels (203b) of the ringing area. As a consequence, the block of pixels (204b) of the local background area may correspond to the at least one pixel (203a) of the ringing area, as the at least one pixel (203a) of the ringing area will belong to the subset of pixels forming a block of pixels (203b) of the ringing area. For example, as shown on Fig. 3b, the block of pixels (204b) of the local background area may be chosen such that it corresponds to an area of pixels that is substantially symmetrical, with respect to a boundary area (205) between the ringing area and the local background area, to an area of pixels to which the block of pixels (203b) of the ringing area corresponds. In such embodiments, the pixel (204a) of the local background area may be selected in the block of pixels (204b) of the local background area. Depending on the embodiment, the selection of the pixel (204a) in the block of pixels (204b) of the local background area (204) may be a random selection or a selection performed according to any suitable criterion.

In some embodiments, once the first set of operations as described above are completed, at least one pixel of the ringing area and a pixel of the local background area that corresponds to the at least one pixel of the ringing area have been determined. Further operations of the proposed scheme according to one or more embodiments may then be performed as described above, resulting in the determination of a quality coefficient. As a consequence, according to the first set of operations, a starting point used for performing the proposed method may be a ringing area, and the proposed scheme may result in the determination of a quality coefficient which is associated to the at least one pixel in the ringing area.

In the following, a description of a second set of operations for performing the proposed scheme according to embodiments of the present subject disclosure is provided.

In one or more embodiments, the proposed method may further comprise a determination of a boundary area of pixels, which comprises pixels of the image located in-between the ringing area and the local background area, so that once the boundary area is determined, at least one pixel of the boundary area may be selected for performing the proposed scheme. In some embodiments, the boundary area of pixels may be a boundary line of pixels between the ringing area and the local background area. Depending on the embodiment, the selection of the at least one pixel in the boundary area may be a random selection or a selection performed according to any suitable criterion.

In some embodiments, once a pixel of the boundary area is selected, the at least one pixel of the ringing area of the proposed scheme may be determined as a pixel of the ringing area that corresponds to the at least one pixel of the boundary area.

For example, a pixel may be selected in the ringing area based on its distance to the pixel selected in the boundary area. The distance to the pixel selected in the boundary area may be calculated using any suitable conventional scheme for calculating a distance between two pixels in an image, such as the Euclidian distance.

Once the at least one pixel of the ringing area is determined, a pixel of the local background area that corresponds to the at least one pixel of the ringing area may be determined. For example, a pixel may be selected in the local background area based on the at least one pixel of the ringing area, e.g. based on a position of the at least one pixel in the ringing area.

For example, in some embodiments, the pixel of the local background area may be chosen such that it is at a distance to the boundary area which is substantially the same as a distance of the at least one ringing pixel to the boundary area. The distance of a pixel to the boundary area may be calculated based on an orthogonal projection of a point representing the pixel to the boundary area.

In some embodiments, the pixel of the local background area that corresponds to the at least one pixel of the ringing area may be determined as a pixel in the local background area which is symmetric of the at least one pixel of the ringing area with respect to the boundary area.

In some embodiments, a subset of pixels forming a block of pixels of the local background area may be determined based on the at least one pixel of the ringing area. As a consequence, the block of pixels of the local background area may correspond to the at least one pixel of the ringing area. In such embodiments, the pixel of the local background area may be selected in the block of pixels of the local background area. Depending on the embodiment, the selection of the pixel in the block of pixels of the local background area may be a random selection or a selection performed according to any suitable criterion.

In some embodiments, once the second set of operations as described above are completed, at least one pixel of the ringing area and a pixel of the local background area that corresponds to the at least one pixel of the ringing area have been determined. Further operations of the proposed scheme according to one or more embodiments may then be performed as described above, resulting in the determination of a quality coefficient. As a consequence, according to the second set of operations, a starting point used for performing the proposed method may be a boundary area, and the proposed scheme may result in the determination of a quality coefficient which is associated to the at least one pixel of the boundary area.

In one or more embodiments in which the starting point used for performing the proposed method is a boundary area, the performing the comparison of the local distortion value for the at least one pixel of the ringing area with the local distortion value for the pixel of the local background area may comprise the determination of a processing area of pixels around the pixel of the boundary area, which processing area comprises pixels of the local background area and pixels of the ringing area. The size (e.g. the width) of the part of the processing area which overlaps the local background area may be similar to the size (e.g. the width) of the part of the processing area which overlaps the ringing area. In such embodiments, the comparison may involve comparing a mean local distortion value computed on pixels of the ringing area comprised in the processing area with a mean local distortion value computed on pixels of the local background area also comprised in the processing area.

Therefore, using a processing area determined with a similar size in the overlap with the ringing area as compared to the overlap with the local background area allows performing processing in the ringing area and in the local background area for determining the mean local distortion values of the same scale. In addition, using a processing area with an overlap with the ringing area and an overlap with the local background area allows determining a plurality of local distortion values for each of the ringing area and the local background area, based on which respective mean local distortion values may be determined, so as to correct potentially undesirable effects of local maxima and minima of local distortion values. The size in number of pixels of each of the overlap with the ringing area and overlap with the local background area may advantageously be chosen based on a desired accuracy level for the mean, as the greater the pixel area the more accurate the mean value calculated for this pixel area. Further, using a processing area determined with a similar size in the overlap with the ringing area as compared to the overlap with the local background area advantageously avoids comparing a local distortion value determined for the ringing area with a local distortion value determined for the local background area where the two local distortion values have not been determined with the same or a similar accuracy. Accordingly, using a processing area determined with a similar size in the overlap with the ringing area as compared to the overlap with the local background area advantageously leads to comparing a local distortion value determined for the ringing area with a local distortion value determined for the local background area where the two local distortion values have been determined with the same or a similar accuracy.

In order to more efficiently use the proposed scheme, it may be advantageous, in one or more embodiments, to use such proposed process only on, or for the most part, on sharp contours that have been identified in the image.

In order to limit the processing of the image to sharp contours, such sharp contours may first be identified in the image by eliminating contours (for example, before contour detection is performed) that are not sharp among the contours identified in the image. Eliminating non-sharp contours, instead of merely disregarding them for purposes of applying the proposed scheme, may be advantageous for use of the proposed scheme as such non-sharp contours may be superfluous as they are not prone to ringing effects. Further, when present in a local background area used according to the proposed scheme, such non-sharp contours may constitute useless information which clutter the local background area and deteriorate the quality of the proposed processing performed in the local background area.

In one or more embodiments, the non-sharp contours of the image may be eliminated by generating, based on the image, a pre-processed image (referred to as a "cartoon image"), which contains only homogeneous areas. As a result, the only contours present in the cartoon image may only sharp contours in between two well homogeneous areas. In some embodiments, the generation of and processing on a cartoon image to eliminate non-sharp contours may be performed before contour detection is performed.

Therefore, in some embodiments, the proposed method may further comprise performing image decomposition on the image to generate a cartoon image. In such embodiments, the contour detection to detect the one or more contours in the image may advantageously be performed on the cartoon image.

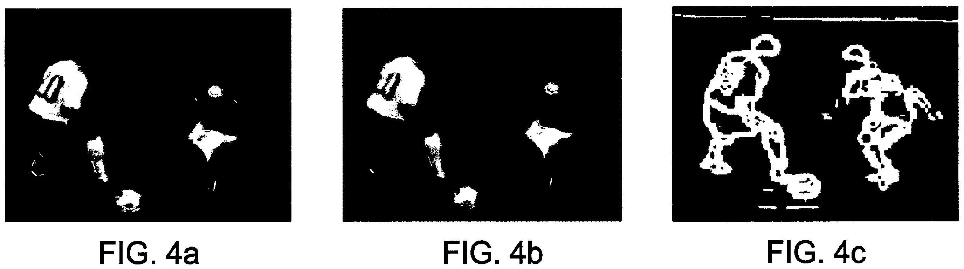

Fig. 4a shows a portion of an image which comprises two football players, Fig. 4b shows an exemplary cartoon image of this image portion, and Fig. 4c shows the result of an exemplary contour detection applied on the cartoon image.

In one or more embodiments, the generation of the cartoon image may be performed using the algorithm described in the paper entitled "Nonlinear total variation-based noise removal algorithms," by L. Rudin, S. Osher, and E. Fatemi, Physica D, p 259-268, 1992, which algorithm operates by progressively reducing textures identified in the image while preserving contours that are sharp.

In one or more embodiments, a contour detection is applied to the generated cartoon image, for example using a contour detection scheme that operates by thresholding of the gradient norm, for example using a Sobel-type filter. As shown in Fig. 4c, the resulting image allows generating a precise map of only (or mostly) sharp contours of the image.

In one or more embodiments, once sharp contours of the image are identified, a ringing area, a boundary area, and a local background area may be identified with respect to an identified sharp contour. The proposed process according to various embodiments described in the present subject disclosure may be reiterated according to a processing loop which iteratively determines quality coefficients associated with respective (sharp) contours of the image.

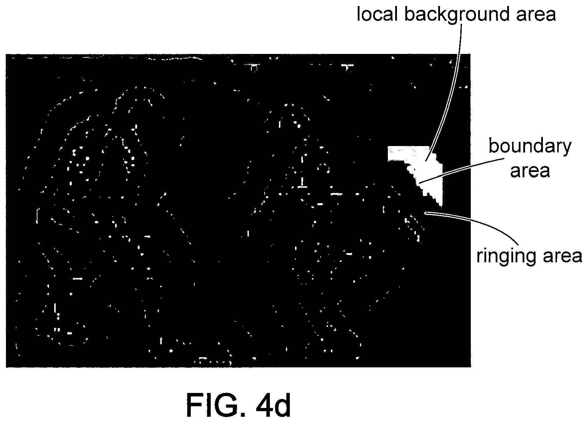

Fig. 4d show an exemplary set comprising a ringing area, a boundary area, and a local background area around a contour of the players shown in Fig. 4a.

As shown on Fig. 4d, in some embodiments, any area of pixels in close proximity to a sharp contour may be considered as a ringing area, as such areas are more likely to be impacted by ringing.

As shown on Fig. 4d, in some embodiments, once a ringing area has been determined with respect to a determined contour, a corresponding local background area may be defined as an area of pixels located in the neighborhood of the determined area further away from the corresponding (sharp) contour.

In some embodiments, an expansion factor of a predefined size (e.g. of 8 pixels) may be applied to pixels surrounding an identified (sharp) contour for defining a ringing area, as the ringing is typically located next (or at least very closely) to the contour. In some embodiments, the local background area may be of substantially the same size as the ringing area. For example, both a ringing area and a local background area that correspond to each other may have a depth of *n* pixels (e.g. *n* = 8).

Further to determining a ringing area and a local background area that correspond to each other, a boundary area that delimits these two areas may also determined, for example with a width of *m* pixels (e.g. *m* = 1), m being smaller than *n.*

In other embodiments, the pixel size (e.g. width and/or depth) of the ringing area, the boundary area, and/or local background area may be variable, for example dynamically adjusted based e.g. on features of the processed contour, of the local background area, and/or of the boundary area.

In one or more embodiments, once a ringing area and a local background area that correspond to each other are determined with respect to a determined (sharp) contour, for one or more pixels of the ringing area, and correspondingly for one or more pixels of the local background area, respective local distortion values may be determined.

For example, in some embodiments, for each pixel of the ringing area, and for the corresponding pixel of the local background area corresponding to the ringing area, respective local distortion values may be determined. These local distortion values are representative of activity in the image, so that an area of the image that contains ringing will increase a mean of local distortion values in this area, such as would an area of the image that is strongly textured. The mean of local distortion values of a pixel area of the image may be viewed as representing the spatial activity of this area: if there is little activity in this area, local distortions will be small, whereas inversely if there is strong activity in this area, local distortions will be high. A mean of local distortion values will correspondingly be smaller or greater. For example, a local distortion value *ld_{ringing,i}* may be calculated for the pixel of index *i* of the ringing area, and a local distortion value *ld_{localbackgd,i}* may be calculated for the pixel of the local background area that corresponds to the pixel of index *i* of the ringing area, and the calculation of these local distortion values may be reiterated as iterations of a loop of index *i* = 1 to *n, n* being the size (number of pixels) of the ringing area.

In embodiments where a plurality of respective local distortion values *ld_{ringing,i}* are determined in relation to a plurality of pixels in the ringing area, a mean local distortion value *ld_{ringing,mean}* may be determined for the ringing area based on the plurality of respective local distortion values. Likewise, in embodiments where a plurality of respective local distortion values *ld_{localbackgd,i}* are determined in relation to a plurality of pixels in the local background area, a mean local distortion value *ld_{localbackgd,mean}* may be determined for the local background area based on the plurality of respective local distortion values.

In some embodiments, the local distortion value of a pixel of the image may be determined based on a combination of a horizontal gradient at the pixel and a vertical gradient at the pixel determined for the pixel.

For example, in some embodiments, the local distortion value *ld*(*x, y*) for a pixel (*x, y*) may be computed as: *ld*(*x,y*) = *Dₕ*(*x,y*) + *Dv*(*x*,*y*), where *Dₕ*(*x,y*) is a horizontal gradient at the pixel (*x,y*) and *Dᵥ*(*x,y*) is a vertical gradient at the pixel (*x*, *y*).

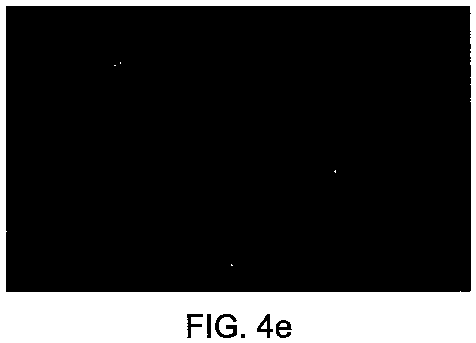

Fig. 4e shows an exemplary map of local distortions determined based on the image shown on Fig. 4a.

In one or more embodiments, one or more local distortion values determined for pixels in the ringing area may be compared with the one or more respectively corresponding local distortion values determined for pixels in the local background area.

In one or more embodiments where a mean local distortion value *ld_{ringing},ₘₑₐₙ* is determined for the ringing area and a mean local distortion value *ld_{localbackgd,mean}* is determined for the local background area, the comparison may be performed between the two mean local distortion values, that is, between the mean local distortion value *ld_{ringing,mean}* determined for the ringing area and the mean local distortion value *ld_{localbackgd,mean}* determined for the local background area.

Comparing a mean of local distortion values determined for pixels of a ringing area with a mean of local distortion values determined for pixels of a background area corresponding to the ringing area advantageously allows distinguishing between an area which is heavily textured from an area that effectively contains ringing. The ringing area and local background area are two pixel areas that are next to each other without any contour bordering in between the two areas. As a consequence, it may be assumed that their background, and therefore their texture are similar, as will likely be their respective levels of activity. Such activity may be high on both pixel areas (as would for example be the activity of pixel areas corresponding to grass e.g. in a football field image), but would be expected to be at a similar level on both pixel areas. In cases where the activity is strong only on one of the two pixel areas, two cases may occur: in a first case, the activity is weaker in the local background area than it is in the ringing area. This situation may be deemed as reflecting ringing in the ringing area, for example as a result of a prior encoding or compression of the image. Such prior encoding or compression may have generated ringing which is confined in the ringing area (which is close to the contour), as opposed to the local background area (which is further away from the contour). The local background area may be viewed as a pixel area which is sufficiently distant from a contour to not be impacted by ringing, whether introduced by prior encoding or otherwise. A second case in which the activity is stronger in the local background area than it is in the ringing area can be deemed reflecting an artefact resulting from an error in the contour determination operation.

As shown on Fig. 4e, a strong activity can be seen around the two football players in the ringing areas as compared to the activity that can be seen in the local background areas corresponding to the ringing areas, which illustrates the presence of ringing in these areas as opposed to the presence of a strong texture.

The activity in the ringing area may therefore be advantageously compared with the activity in the corresponding local background area. In some embodiments, in order to compare the activity in the ringing area with the activity in the corresponding local background area, for each pixel of the boundary area located in between the ringing area and the local background area, a ratio between a mean local distortion value *ld_{ringing,mean}* determined for pixels of the ringing area selected with respect to the pixel of the boundary area and a mean local distortion value *ld_{localbackgd,mean}* determined for pixels of the local background area corresponding to the ringing area, may be determined. For example, for each pixel of the boundary area, a ratio between a mean local distortion value *ld_{ringing,mean}* determined based on respective local distortion area determined for pixels of the ringing area selected with respect to the pixel of the boundary area (e.g. pixels of the ringing area located within a radius of a predetermined number *radius_number* 1 of pixels around the pixel of the boundary area), and a mean local distortion value *ld_{localbackgd,mean}* determined for pixels of the local background area (e.g. pixels of the ringing area located within a radius of a predetermined number *radius_number* 2 (which may be substantially similar or equal to *radius_number* 1) of pixels around the pixel of the boundary area) that corresponds to the ringing area.

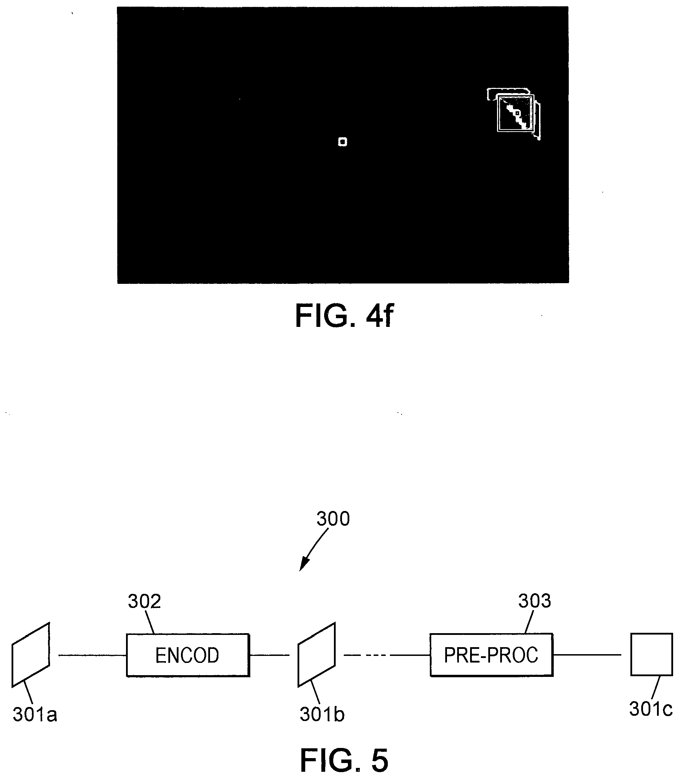

Preferably, the radius may be chosen so that it corresponds to a minimum thickness (or depth, or width) of the determined ringing area. For example, a processing area of size 8 × 8 pixels may be defined for performing operations of the proposed method based on (e.g. around) each pixel of the boundary area, as illustrated on Fig. 4f. Fig. 4f shows a pixel located on an exemplary boundary area (in the form of a boundary line), and an exemplary processing area (of square shape), part of which defines a ringing area on which processing may be carried out (on one side of the boundary area), and part of which defines a local background area on which processing may be carried out (on the other side of the boundary area).

In one or more embodiments, the comparing of the ringing local distortion value with the background local distortion value may comprise computing a ratio of the ringing local distortion value by the background local distortion value, so that the quality coefficient may advantageously be determined based on the ratio.

In one or more embodiments, once respective quality coefficients have been determined for (sharp) contours determined on the image, a map of quality coefficients (which may be referred to as a "distortion map" or a "ringing map") comprising quality coefficients respectively determined for pixels of (sharp) contours determined on the image may be obtained. Each of these quality coefficients may be viewed as illustrating an amount of ringing present in the image in the area proximal to the quality coefficient.

In some embodiments, the distortion map may be generated further to generating a contour map of the image showing respective positions of the determined (sharp) contours in the image. The distortion map may be obtained by including quality coefficients calculated for pixels of the contours showed on the contour map.

In one or more embodiments, the determined quality coefficients (for example, the quality coefficients of a distortion map) may advantageously be used to drive an image processing algorithm configured for reducing artefacts (such as ringing artefacts) implemented on images that have previously been compressed (or encoded). Such algorithm may use quantization tables (of quantization coefficients) that have been used for quantization of pixel blocks of the image as part of the previous compression (encoding) of the image. In some cases, these quantization coefficients which were used for quantization of blocks of the image during a previous encoding of the image are not known, so that it is desirable to generate an estimate of such quantization coefficients.

In some embodiments, the proposed method may advantageously be implemented as part of a pre-processing of an image, in order to reduce the ringing artefacts that me be present in the image as a consequence of a prior encoding (or compression) of the image.

Fig. 5 illustrates an exemplary processing chain (300) that may be encountered by an image (or a video frame) as part of the distribution of the image to a player device (not shown on the image).

As shown on Fig. 5, an input image (301 a) may encounter, e.g. during distribution of a multimedia flow comprising the input image to a player device, a first compression by an image encoder (302), which produces in output an encoded version (301b) of the input image (301a). The encoded version (301b) of the input image (301a) may include artefacts generated on the input image (301b) by the compression performed by the encoder (302), in particular ringing artefacts.

As part of the distribution of the image, the encoded version (301b) may advantageously be submitted to a pre-processing (303) for, inter alia, reducing the artefacts generated by previous processing performed on the input image (301a). The pre-processed version (301c) of the image which is output by the pre-processing (303) performed on the encoded version (301b) of the image, may be viewed as a cleaner version of the image as artefacts such as ringing artefacts that may be present in the encoded version (301b) will have advantageously been reduced in the pre-processed version (301c) of the image, which allows for improved results of further processing that may be performed on the pre-processed version (301c) of the image, e.g. as part of the distribution of the image to a player device.

In one or more embodiments, quantization coefficients previously used for the encoding of the image may advantageously be estimated based on one or more of the quality coefficients calculated for the image.

In some embodiments, quantization coefficients previously used for the encoding of the image may be estimated based on one or more of the quality coefficients calculated for the image by associating a quantization table to a quality coefficient (e.g. obtained based on a mean of a plurality of determined quality coefficients).

Therefore, in one or more embodiments, the proposed method may further comprise: determining one or more quantization coefficient estimates (e.g. a quantization table estimate) of quantization coefficient which were used for a prior encoding of the image, based on the quality coefficient or based on a mean quality coefficient calculated on a plurality of quality coefficients determined for a pixel block of the image or for the image. The quality coefficient used for determining the quantization table estimate may be comprised in the plurality of quality coefficients.

In some embodiments, the one or more quantization coefficient estimates or, depending on the embodiment, the quantization table estimate, may be determined based on the quality coefficient or the mean quality coefficient using a predefined table of correspondences between quality coefficients and quantization tables.

For example, in some embodiments, a large number of test images may be compressed using different quantization tables, and the proposed method may be applied on each of these images in order to generate respective sets of quality coefficients (or, depending on the embodiment, respective distortion maps).

Based on these sets of quality coefficients (or, depending on the embodiment, respective distortion maps), one or more correspondences between one or more quality coefficients calculated for the image and one or more quantization coefficients used for quantization during previous encoding of the image may be defined.

For example, in embodiments in which a distortion map is generated for a test image, a mean quality coefficient may be determined based on quality coefficients determined for a pixel block (e.g. a 8 × 8 pixel block), and a correspondence between the mean quality coefficient and the quantization table that was effectively used for quantization of the pixel block may be defined.

Several iterations of this scheme for defining a correspondence between one or more quality coefficients (e.g. a mean quality coefficient) and one or more quantization coefficients (e.g. a quantization table) effectively used for quantization during the prior encoding of the image according to an embodiment, may be performed in order to build a look-up table comprising respective correspondences between quality coefficients and quantization coefficients (or sets of quantization coefficients, or quantization tables).

Therefore, in one or more embodiments, the proposed method may further comprise using the quality coefficient for estimating a quantization table that was used for processing the image.

In some embodiments, the proposed scheme for defining a correspondence between one or more quality coefficients (e.g. a mean quality coefficient) and one or more quantization coefficients (e.g. a quantization table) effectively used for quantization during the prior encoding of the image may be performed, fully or partially, using a machine learning algorithm, which may advantageously allow automating performance of the scheme and therefore using the proposed scheme on a large number of test images.

In some embodiments, the quality coefficients determined for an image according to embodiments of the present subject disclosure may advantageously be used to obtain estimates of quantization coefficients that were used during a previous encoding of an image, as such quantization may have generated ringing artefacts on the image. The estimates of quantization coefficients may in some embodiments be obtained based on the quality coefficients determined for the image (e.g. for pixel blocks of the image) using a predetermined look-up table of correspondences between quality coefficients and quantization coefficients (e.g. quantization tables) respectively corresponding to each other.

In some embodiments, respective estimates of quantization coefficients used during previous encoding of the image may be obtained for one or more pixel blocks of the image (or, in some embodiments, for each pixel block of the image), based on one or more quality coefficients respectively determined for one or more pixels of one of the one or more pixel blocks of the image, for example using a predefined look-up table.

In some embodiments, respective estimates of quantization coefficients used during previous encoding of the image may be obtained only for pixel blocks which comprise a pixel of a determined (sharp) contour in the image (based on one or more quality coefficients respectively determined for one or more pixels of one of the pixel blocks, for example using a predefined look-up table).

As a consequence, the proposed method may advantageously allows providing configuration data and input data to a pre-processing algorithm configured for reducing artefacts present in a pre-processed image, including by providing estimates of quantization coefficients that may have been used in a prior encoding of the pre-processed image. In some embodiments, the estimates of quantization coefficients may be obtained further to applying the proposed method to pixels (e.g. pixel blocks) of the pre-processed image for determining respective quality coefficients for the pixels (respectively the pixel blocks), and determining quantization coefficient estimates (e.g. quantization table estimates) that respectively correspond to the quality coefficients, for example using a pre-determined look-up table.

An exemplary architecture of an apparatus, such as a processing node (for example comprised in a multimedia distribution chain or in a multimedia processing chain), according to the present subject disclosure is illustrated on Fig. BB which shows an apparatus 1 configured to perform a method for processing an image in accordance with embodiments of the present subject disclosure.

The apparatus 1, which may comprise one or more computers, includes a control engine 2, an image processing engine 3, a data interface engine 4, and a memory 5.

In the architecture illustrated on Fig. BB, all of the image processing engine 3, data interface engine 4, and memory 5 are operatively coupled with one another through the control engine 2.

In some embodiments, the image processing engine 3 is configured to perform various aspects of embodiments of one or more of the proposed methods for image processing as described herein, such as performing a contour detection on an input image, and determining one or more quality coefficients for one or more contours of the input image.

In some embodiments, the data interface engine 4 is configured to receive an input image, possibly as part of an input video data, and to output one or more quality coefficients determined according to embodiments of the proposed methods.

The control engine 2 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2 may also comprise, or may be in communication with, computer storage media, such as, without limitation, the memory 5, capable of storing computer program instructions or software code that, when executed by the processor, causes the processor to perform the elements described herein. In addition, the memory 5 may be any type of data storage or computer storage medium, coupled to the control engine 2 and operable with the data interface engine 4 and the image processing engine 3 to facilitate management of data stored in association therewith, such as, for example, a cache memory, a data farm, a data warehouse, a data mart, a datacenter, a data cloud, or a combination thereof.

In embodiments of the present subject disclosure, the apparatus 1 is configured for performing one or more of the image processing methods described herein. The apparatus 1 may in some embodiments be included in an image pre-processing unit, an image encoder or, depending on the embodiments, in a video encoder or a video codec.

It will be appreciated that the apparatus 1 shown and described with reference to Fig. BB is provided by way of example only. Numerous other architectures, operating environments, and configurations are possible. Other embodiments of the node may include fewer or greater number of components, and may incorporate some or all of the functionality described with respect to the apparatus components shown in Fig. BB. Accordingly, although the control engine 2, image processing engine 3, data interface engine 4, and memory 5 are illustrated as part of the apparatus 1, no restrictions are placed on the location and control of components 2 - 5. In particular, in other embodiments, any of components 2-5 may be part of different entities or computing systems.

The proposed method may be used for the processing, for purposes of encoding or compression, or decoding or decompression, of input data which may correspond, depending on the embodiment, to an image, a picture, a video frame, or video data.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method of processing an image, comprising:
- Perform contour detection on the image to detect one or more contours in the image;
- For at least one contour of the image,
∘ determine a ringing area of pixels, wherein the ringing area comprises a first set of pixels of the image located on a first side of the at least one contour;
o determine a local background area of pixels that corresponds to the ringing area, wherein the local background area comprises a second block of pixels of the image located on the first side of the at least one contour beyond the ringing area;
∘ determine a ringing local distortion value for at least one pixel of the ringing area;
∘ determine a background local distortion value for a pixel of the local background area that corresponds to the at least one pixel of the ringing area;
∘ compare the ringing local distortion value with the background local distortion value; and
∘ determine a quality coefficient based on the comparison.

2. The method according to claim 1, further comprising:
- Determine a set of pixels of the ringing area comprising pixels in the neighborhood of the at least one pixel of the ringing area;
- Determine respective local distortion values for pixels of the set of pixels of the ringing area; wherein the ringing local distortion value is determined based on a mean of the respective local distortion values for pixels of the set of pixels of the ringing area;

3. The method according to claim 2, further comprising:
- Determine a set of pixels of the local background area comprising pixels in the neighborhood of the pixel of the local background area that corresponds to the at least one pixel of the ringing area;
- Determine respective local distortion values for pixels of the set of pixels of the local background area; wherein the background local distortion value is determined based on a mean of the respective local distortion values for pixels of the set of pixels of the local background area;

4. The method according to any of the preceding claims, further comprising:
- Determine the at least one pixel in the ringing area among pixels of the ringing area;
- Determine the pixel of the local background area that corresponds to the at least one pixel of the ringing area
Wherein the determined quality coefficient is associated to the at least one pixel in the ringing area.

5. The method according to any of the preceding claims, wherein the pixel of the local background area that corresponds to the at least one pixel of the ringing area is determined as a pixel in the local background area which is symmetric of the at least one pixel of the ringing area with respect to a boundary area, wherein the boundary area comprises pixels of the image located in-between the ringing area and the local background area.

6. The method according to any of the preceding claims, wherein the local background area is comprised of pixels of the image which are not comprised in any of the one or more contours.

7. The method according to any of the preceding claims, wherein the local background area is comprised of pixels of the image which are not comprised in any of ringing areas determined on the image.

8. The method according to any of the preceding claims, further comprising:
- Determine a boundary area of pixels, wherein the boundary area comprises pixels of the image located in-between the ringing area and the local background area;
- For at least one pixel of the boundary area, determine the at least one pixel of the ringing area as a pixel of the ringing area that corresponds to the at least one pixel of the boundary area; wherein the determined quality coefficient is associated to the at least one pixel of the boundary area.

9. The method according to claim 13, wherein performing the comparison comprises:
- Determine a processing area of pixels around the pixel of the boundary area, wherein the processing area comprises pixels of the local background area and pixels of the ringing area,
- compare a mean local distortion value computed on pixels of the ringing area comprised in the processing area with a mean local distortion value computed on pixels of the local background area comprised in the processing area.

10. The method according to any of the previous claims, wherein comparing the ringing local distortion value with the background local distortion value comprises: computing a ratio of the ringing local distortion value by the background local distortion value for, wherein the quality coefficient is determined based on the ratio.

11. The method according to any of the previous claims, further comprising: determining a quantization table estimate based on the quality coefficient or based on a mean quality coefficient calculated on a plurality of quality coefficients determined for a pixel block of the image or for the image, wherein the quality coefficient is comprised in the plurality of quality coefficients.

12. The method according to claim 19, wherein the quantization table estimate is determined based on the quality coefficient or the mean quality coefficient using a predefined table of correspondences between quality coefficients and quantization tables.

13. The method according to any of the previous claims, further comprising: using the quality coefficient for estimating a quantization table that was used for processing the image.

14. An apparatus, the apparatus comprising a processor and a memory operatively coupled to the processor, wherein the apparatus is configured to perform a method according to any of claims 1 to 13.

15. A computer program product comprising computer program code tangibly embodied in a computer readable medium, said computer program code comprising instructions to, when provided to a computer system and executed, cause said computer to perform a method according to any of claims 1 to 13.
